# EUROPEAN PATENT SPECIFICATION

(11) **EP 3 618 939 B1**
(45) Date of publication and mention of the grant of the patent: **19.04.2023**
(21) Application number: 18723442.2
(22) Date of filing: 27.04.2018
(51) Int. Cl.: B01D 27/10, F01M 1/10, F16N 39/06, B01D 35/153, B01D 35/147, B01D 29/15

(54) **AN OIL HOUSING, FILTER ELEMENT, AND VALVING ASSEMBLY FOR PROVIDING PRE-CHARGED OIL VOLUME CHANGES**
ÖLGEHÄUSE, FILTERELEMENT UND VENTILANORDNUNG ZUR BEREITSTELLUNG VON VORABGELADENEN ÖLVOLUMENÄNDERUNGEN
BOÎTIER D'HUILE, ÉLÉMENT FILTRANT ET ENSEMBLE SOUPAPE POUR FOURNIR DES CHANGEMENTS DE VOLUME D'HUILE PRÉCHARGÉ

(30) Priority: 30.04.2017 US 201762492273 P
(43) Date of publication of application: 11.03.2020
(73) Proprietor: MANN+HUMMEL GmbH, 71636 Ludwigsburg (DE)
(72) Inventor: AHUJA, Rajan, 27615 Raleigh (US); MARTIN, Michael A., Nashville, Michigan 49073 (US); EDWARDS, Patrick, Cary, North Carolina 27518 (US); BABB, Kevin Brian, Vicksburg, Michigan 49097 (US)
(74) Representative: Mann + Hummel Intellectual Property
(86) International application number: PCT/EP2018/060974
(87) International publication number: WO 2018/202599

(56) References cited:
- DE-A1- 3 048 219
- DE-A1- 19 511 450
- DE-U1-202007 002 162
- JP-A- 2000 288 317
- JP-B2- 3 653 802

## Description

### TECHNICAL FIELD

The present disclosure generally relates to the field of oil filtration and methods of changing oil and replacing filter elements thereof.

### BACKGROUND

When using motorized machinery, and particularly in the field of vehicles using various fluids for lubrication, such as oil. In particular, it is advantageous to ensure that lubricating oil is clean and performing properly. In order to ensure oil cleanliness these fluid streams are often filtered, and the fluid itself is regularly replaced at desired service intervals. Accordingly, oil filters, as well as other filter elements, are regularly replaced or cleaned so as to increase the service life of the machine or vehicle. In the past, changing lubricating oil, along with the associated filter, has proven to be a time consuming and messy process. In particular, depending on filter orientation, the detachment of a used filter element can contain used oil which can then drip, drain, or otherwise spill out of the filter element upon separation from the mount or housing and thus result in further required cleaning of the equipment itself or the floor or ground underneath the equipment. Further, the drain and refill process of the used oil can also be messy and time consuming, as well as difficult to dispose of when finished.

From the JP 3653802 B2 an element assembly having a filter element for filtering oil for lubricating an internal combustion engine is known; A filter housing having a bottomed cylindrical shape to which the element assembly is attachable and having an oil inlet and an oil outlet on a bottom surface; A cap coupled to the filter housing and holding the filter housing in a fluid-tight manner; In the use state of the filter housing, in which the element assembly is mounted and the cap is connected, the oil inlet side of the filter housing can be made to flow from an oil inlet side of the filter housing to the element assembly side in accordance with an increase in the pressure of the sewage oil delivered from the internal combustion engine side. To prevent the return of the waste oil flowing into the element assembly side to the oil inlet side and to remove the element assembly from the filter housing. An inlet side anti-drain valve is moved in conjunction with a loosening operation of the cap coupled with the filter housing, and is capable of freely returning the waste oil on the element assembly side to the oil inlet side of the filter housing.

### SUMMARY OF THE INVENTION

Contemplated herein is a system and method for providing a filter or housing having a quantity of clean oil sealingly contained therein to an engine or piece of machinery in a manner such that the a quantity of contaminated or used oil is removed from the system when the existing filter assembly or housing is removed from a mount interface, wherein the contaminated oil is retained in a sealed manner within the existing or used filter assembly and a new filter assembly, having a quantity of clean oil contained therein, is provided to the mount interface so as to facilitate a drip free and simultaneous filter and oil change.

As such, contemplated herein is an oil filtration system, the system having a mount interface having a contaminated conduit and a clean conduit wherein the mount interface is configured to couple to an element housing. As illustrated herein the element housing can include an inlet, which could be an annular inlet or otherwise, being provided about an end portion of the element housing as well as a clean outlet being provided about a central axis of the end portion of the housing.

As illustrated, the housing can be sealed around a perimeter edge by utilizing a perimeter seal which extends circumferentially around the housing and abuts against the mount interface. Further, a first inner seal member can be provided which is configured to seal and separate a clean fluid exiting the clean outlet into the clean conduit from a contaminated fluid entering the inlet from the contaminated conduit when in an installed state about the mount interface. Also illustrated is a second inner seal member being configured to seal the clean outlet to a perimeter portion of the clean conduit the mount interface;

The housing can then be provided with a clean valve being positioned about the clean outlet, the clean valve being configured to bias in a closed position in an uninstalled state and being configured to remain open in an installed state.

It will then be appreciated that the valve and the seals can be configured such that, wherein, upon removal, the valve is configured to be closed prior to the release of either the first inner seal member or the second inner seal member; and wherein the first inner seal member is configured to release a respective seal after the release of a second respective seal of the second inner seal member.

In some embodiments, an actuation member can be provided which extends from the clean conduit and as such is able to extend into the clean outlet and actuate the valve.

In some additional embodiments, and as illustrated, a secondary contaminated side valve can be provided, wherein the contaminated side valve can be configured to bias in a closed position, the contaminated side valve being configured to open in response to a positive pressure provided in the contaminated conduit in the installed state. In some such embodiments, the secondary contaminated side valve can be provided with a spring to bias the secondary contaminated side valve in a closed position.

In some yet additional embodiments, and as illustrated, the mount interface can include a first annular protrusion; and a second annular protrusion. In some such embodiments, the first annular protrusion can thus form the clean conduit therein, i.e. between the first and second annular protrusions, and wherein the first inner seal member is configured to abut against an inner surface thereof along a first axial distance between the installed state and a disengaged state. Accordingly, the second inner seal member can then be configured to abut against an interior portion of the second annular protrusion forming a clean pathway along the axial portion, wherein the second inner seal is engaged along a second axial distance between the installed state and a second disengaged state. As illustrated, the first axial distance can be configured to be longer than the second axial distance such that the second inner seal is disengaged allowing for oil to drain into the clean conduit into space created by the axial translation of the filter housing, thus causing a funnel effect which then reduces or eliminates any oil drips into the surrounding area or environment.

Also, as illustrated, the element housing can be provided with a sealed internal volume between the clean valve and the contaminated side valve in the uninstalled state, and wherein the system is provided with an initial volume of clean oil prior to installation.

Also contemplated herein is a method of installing a filter assembly, the method including the steps of: providing a mount interface on a piece of equipment, the mount interface having a contaminated conduit and a clean conduit; providing a filter and mount interface as described above and the additional steps of: positioning the clean outlet of the filter assembly about the clean conduit of the mount interface; rotating the filter assembly causing an axial translation of the filter assembly into the mount interface such that the first inner seal member and the second inner seal member are engaged with the mount interface.

Additional steps can include: operating the piece of equipment so as to generate a positive pressure within the contaminated conduit and thus cause the contaminated side valve to open and permit flow therethrough; removing the filter assembly by rotating the filter assembly in an opposing direction, thus causing an opposing axial translation, wherein the opposing axial translation allows the first inner seal member and the second inner seal member to release and wherein the opposing axial translation also allows the clean valve to close.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such claims.

These aspects of the invention are not meant to be exclusive and other features, aspects, and advantages of the present invention will be readily apparent to those of ordinary skill in the art when read in conjunction with the following description, appended claims, and accompanying drawings. Further, it will be appreciated that any of the various features, structures, steps, or other aspects discussed herein are for purposes of illustration only, any of which can be applied in any combination with any such features as discussed in alternative embodiments, as appropriate.

### BRIEF DESCRIPTION OF THE DRAWINGS

The foregoing and other objects, features, and advantages of the invention will be apparent from the following description of particular embodiments of the invention, as illustrated in the accompanying drawings in which like reference characters refer to the same parts throughout the different views. The drawings are not necessarily to scale, emphasis instead being placed upon illustrating the principles of the invention, wherein:
FIGs. 1A-B illustrate exterior side and top views of an oil housing, filter element, and valving assembly for providing pre-charged oil volume changes illustrative of various aspects of the present invention;
FIG. 2 illustrates a side cross-sectional view of the oil housing, filter element, and valving assembly for providing pre-charged oil volume changes of FIG. 1 being illustrative of various aspects of the present invention;
FIG. 3 illustrates a perspective cross-sectional view of the oil housing, filter element, and valving assembly for providing pre-charged oil volume changes of FIG. 2 being illustrative of various aspects of the present invention;
FIGs. 4A-B illustrate perspective partial cross-sectional views of the oil housing, filter element, and valving assembly for providing pre-charged oil volume changes of FIG. 1 being illustrative of various aspects of the present invention;
FIGs. 5A-B illustrate perspective and side cross-sectional views of an exemplary mount interface for use with the oil housing, filter element, and valving assembly for providing pre-charged oil volume changes of FIG. 1 being illustrative of various aspects of the present invention;
FIG. 6 illustrates a perspective cross-sectional view of an oil housing, filter element, and valving assembly for providing pre-charged oil volume changes utilizing an alternative internal clean conduit; and
FIG. 7 illustrates a zoomed partial perspective cross-sectional view of the oil housing, filter element, and valving assembly for providing pre-charged oil volume changes of FIG. 6.

Appendix A includes the documents contained in United States Provisional Application No. 62/492,273, which was filed on April 30th, 2017.

### DETAILED DESCRIPTION OF THE INVENTION

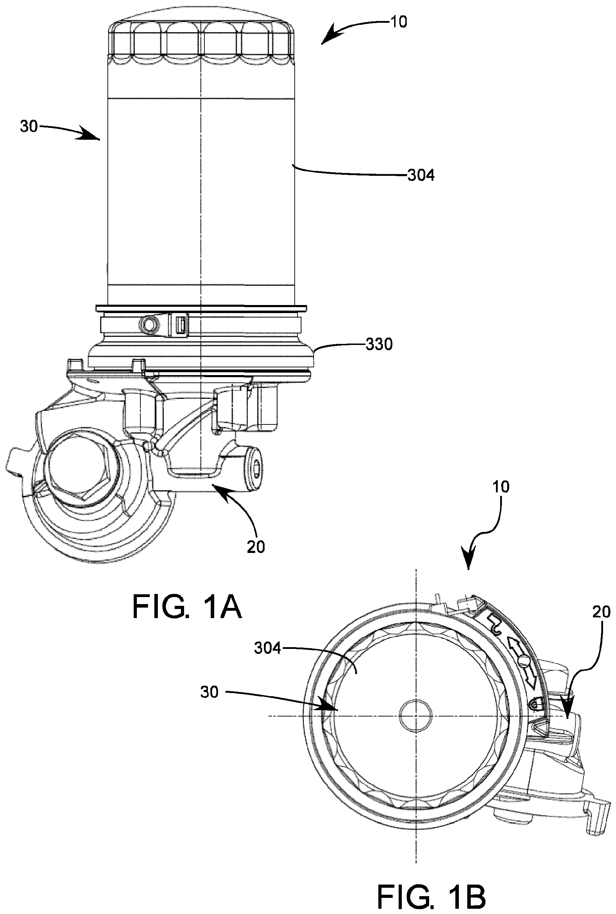

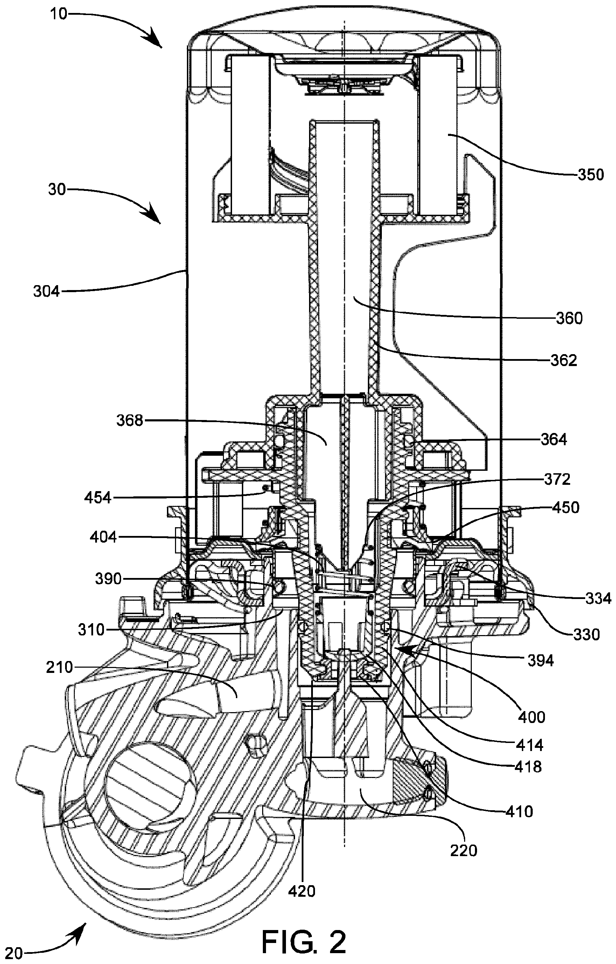

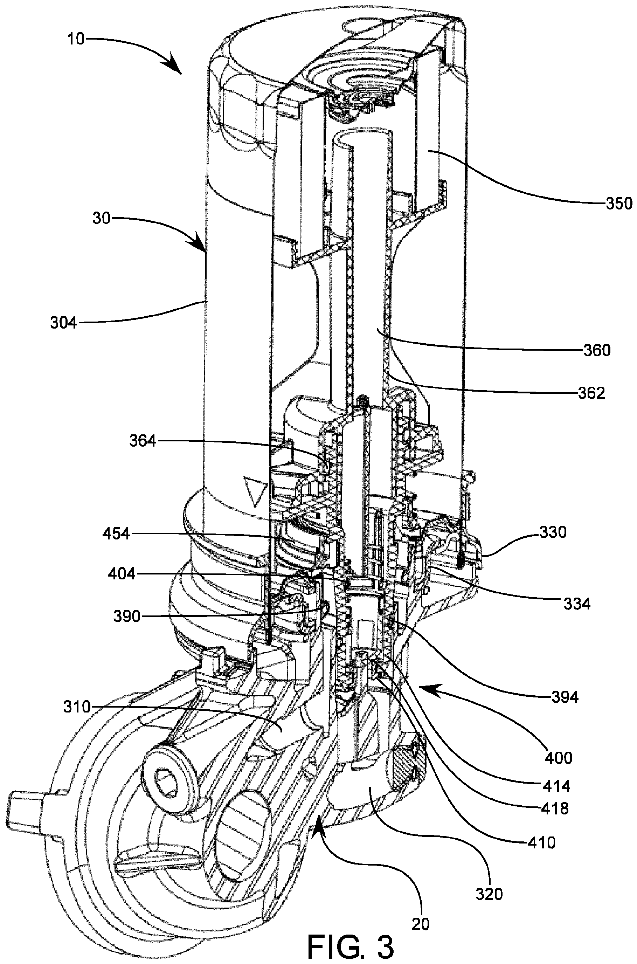

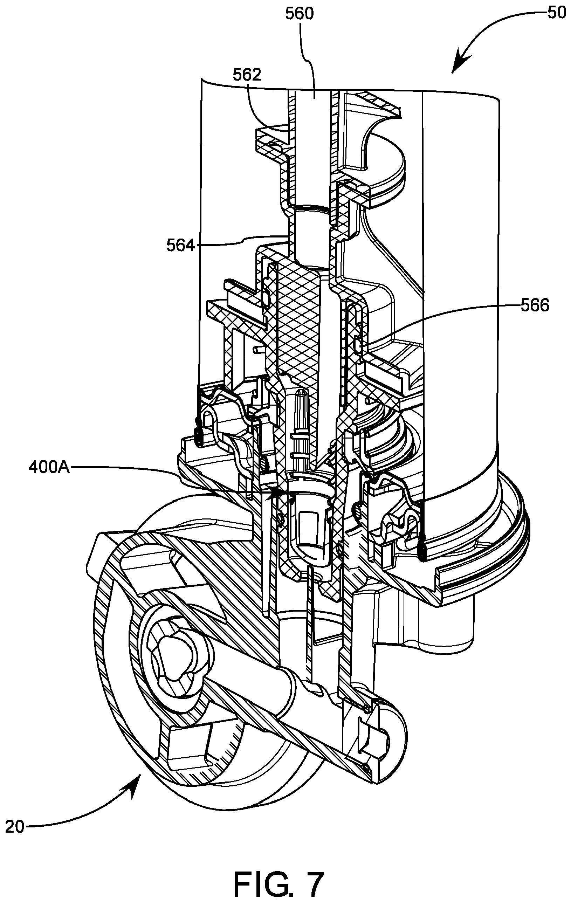

As discussed above, contemplated herein is a system 10 having filter assembly 30 or 50 being shown in FIGs. 1-4, and 6-7 along with an associated method of use. The systems and methods contemplated herein allow for providing a filter assembly 30 having a quantity of clean oil contained therein which allows for a quantity of contaminated or used oil to be removed from the system when the existing filter assembly is removed from a mount interface 20, wherein the contaminated oil is retained in a sealed manner within the filter assembly 30 and a new filter assembly 30, having a quantity of clean oil contained therein, is provided to the mount interface 20 so as to facilitate a drip free and simultaneous filter and partial replacement of total system oil volume.

As such, FIGs. 1-4 illustrate exterior views of the system 10 wherein the filter assembly 30 is attached to the mount interface 20. The mount interface can be provided in a plurality of orientations, and can take numerous forms. The mount interface shown herein is for illustrative purposes only. In some embodiments, and as discussed in more detail below, the mount interface 20 can be oriented with a horizontal contact plane, such that the filter assembly 30 attaches to a top surface. The filter assembly 30 can attach to the mount interface 20 using various methods, such as threaded interfaces, clamps, or locks, but as illustrated is shown as a twist lock which engages and locks over the course of an approximately 90-degree rotation. It will be appreciated that the filter assembly 30 can also thread onto particular components of the mount interface 20 similar to standard pre-existing oil filters presently available wherein a clean outlet can include a female threaded inner surface which mates onto a corresponding male threaded conduit which then receives filtered oil into the machinery or lubrication system.

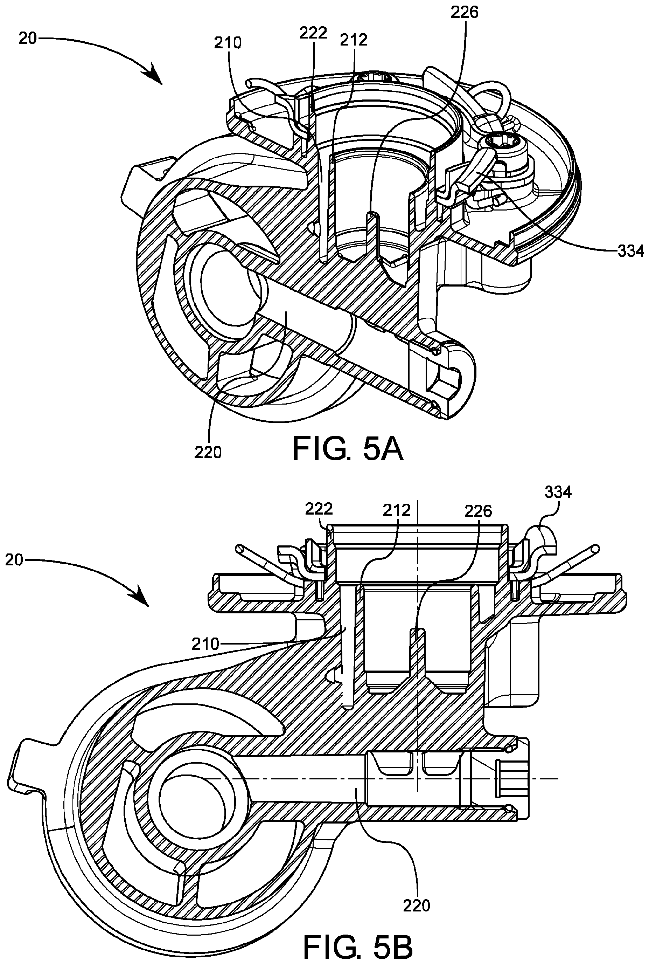

As contemplated herein, and as particularly illustrated in FIGs. 5A-B, the mount interface 20 can include a contaminated conduit 210 and a clean conduit 220 wherein the mount interface 20 is configured to couple to an element housing 304 of the filter assembly 30. As illustrated herein, the filter assembly 30 can include an annular inlet 310 being provided about an end portion of the element housing as well as a clean outlet 320 being provided about a central axis of the end portion of the housing 304. It should be noted that annular inlet 310 could be arranged in a non-annular manner in other configurations and be within the scope of the invention.

It will be appreciated that a contaminated fluid, such as dirty oil, can flow into the element housing 304 from the annular inlet 310, where it passes through contaminated side valve 450 continuing up through the interior of the element housing 304 whereupon it passes through the filter media 350 and into a central clean channel 360 formed in conduit 362 and finally through the clean valve 400 and into the clean conduit 220. It will be understood that the contaminated side valve 450 deflects upwards as pressure from the system drives contaminated oil through the housing when operational, this motion is illustrated by arrow 456, but is biased in a closed state by spring 454.

As illustrated, the housing 30 can be sealed around a perimeter edge by utilizing a perimeter seal 330 which extends circumferentially around the housing and abuts against the mount interface 20. The perimeter of the housing can also be provided with a lock interface 334 such as angled flanges, configured to interface with one or more lock protrusions or ramps 336 provided on the mount interface 20.

Further, a first inner seal member 390 can be provided which is configured to seal an exterior annular portion of the inlet 212 from the perimeter seal.

Also illustrated in these embodiments is a second inner seal member 394 being configured to seal the clean outlet to a perimeter portion of the clean conduit the mount interface and which is configured to seal and separate a clean or filtered fluid exiting the clean outlet 320 into the clean conduit 220 from a contaminated fluid entering the annular inlet 310 from the contaminated conduit 210 when in an installed state about the mount interface 20;

It will then be appreciated that the valve 400 and the first and second inner seals 390 and 394 respectively can be configured such that, wherein, upon removal, the valve 400 is configured to be closed prior to the release of either the first inner seal member or the second inner seal member, and wherein the first inner seal member 390 is configured to release a respective seal after the release of a second respective seal of the second inner seal member 394.

In some embodiments, an actuation member 226 can be provided which extends from the clean conduit 220 and is configured to extend into the clean outlet and actuate the valve 400 into an open position upon installation. As shown herein the actuation member 226 is a protrusion that can be configured to extend into the valve body and displace an inner moveable valve body 418. It will be appreciated that various alternative means for automatically opening the valve upon installation and subsequent sealing upon removal may also be contemplated herein. Examples of such might include alignment of channels, using a lip or ridge portion of the inlet to press against a corresponding ledge or circumference of the valve, etc.

In some additional embodiments, and as illustrated, a secondary contaminated side valve 450 can be provided, wherein the contaminated side valve 450 can be configured to bias in a closed position, the contaminated side valve 450 being configured to open in response to a positive pressure provided in the contaminated conduit in the installed state. In some such embodiments, the secondary contaminated side valve 450 can be provided with a spring 454 being configured to bias the secondary contaminated side valve 450 in a closed position such that contaminated oil does not leak back into the system or out of the filter housing when not in operation or upon removal. It will be appreciated that this valve movement can be achieved through elastic deformation, or translation of the valve components.

In some yet additional embodiments, and as illustrated, the mount interface 20 can include a first annular protrusion 212; and a second annular protrusion 222. In some such embodiments, the first annular protrusion 212 can thus define an outer annular sidewall such that the clean conduit 220 is formed therein, i.e. between the first and second annular protrusions respectively.

Additionally, the first inner seal member 390 can be configured to abut against an inner surface of the first annular protrusion 212 along a first axial distance 214 being defined as a distance between the position of the first inner seal member 390 in the installed position and the upper edge of the first annular protrusion 212 or in other words, the distance that must be traveled between an installed state and a disengaged state. Accordingly, the second inner seal member 394 can then be configured to abut against an interior portion of the second annular protrusion 222 forming a clean pathway along the central axis, wherein the second inner seal 222 is engaged along a second axial distance 224 between the installed state and a second disengaged state. As illustrated, the first axial distance 214 can be configured to be longer than the second axial distance 224 such that the second inner seal 394 is disengaged prior to the first inner seal allowing for oil contained between the contaminated side valve 450 and the inlet 210 in an intermediate state to drain into the clean conduit 220 and into space created by the axial translation of the filter housing 304 away from the clean conduit 220, thus causing a funnel effect which then reduces or eliminates any oil drips into the surrounding area or environment as all oil will drain back into the system. It will also be understood that the relative heights of the second annular protrusion and the first annular protrusion can also be switched so as to cause the contaminated side to open before the clean side such that filtered oil drains into the contaminated side and is contained therein upon removal.

Also, as illustrated, the element housing can be provided with a sealed internal volume between the clean valve and the contaminated side valve in the uninstalled state, and wherein the system is provided with an initial volume of clean oil prior to installation and also is capable of transporting a portion of contaminated oil away upon removal.

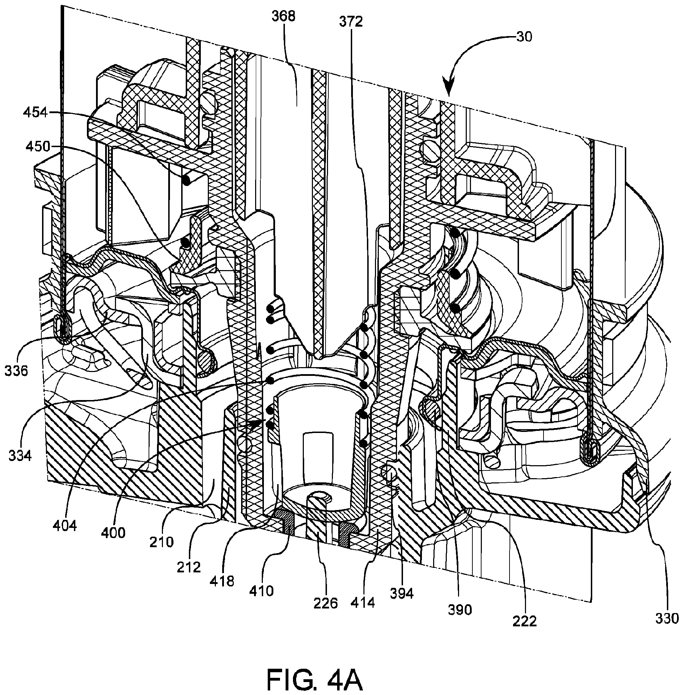

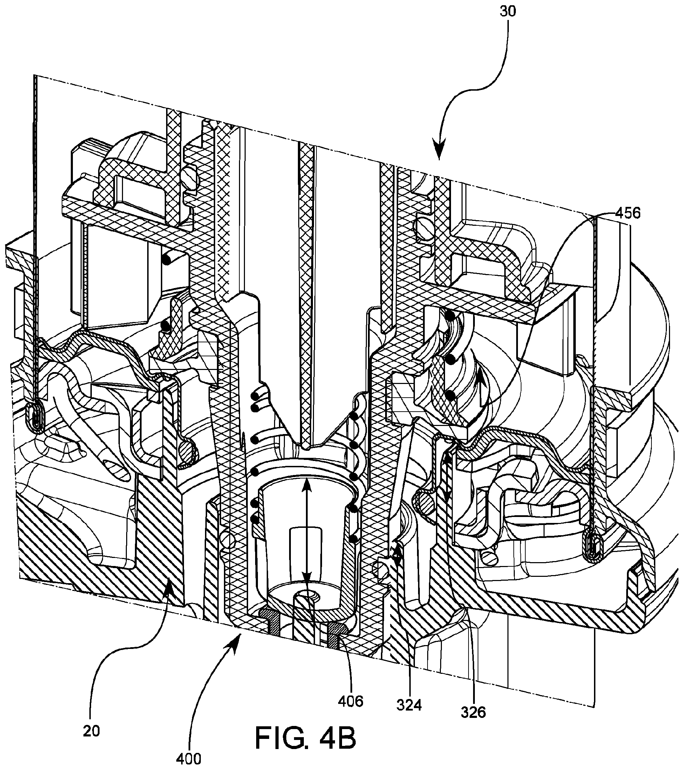

The clean valve 400 can be positioned about the clean outlet 320, the clean valve 400 can then be configured to bias in a closed position in an uninstalled state, and conversely be configured to remain open in an installed state. This biasing can be achieved by providing a spring 404 to the valve 400 so as to push the valve in a downward or closed position, the valve 400 being configured to translate as evidenced by arrows 406 in FIG. 4B, the downward most position being closed, and the upward position being open.

As shown herein the clean valve 400 can include an outer valve housing 414 and an inner moveable valve body 418 wherein the inner moveable valve body 418 can move axially upwardly in response to the actuation member 226. In a removed state the inner moveable valve body 418 is pressed by the spring 404 down into a sealing grommet 410, but as it is installed, the actuation member 226 pushes the inner moveable valve body 418 within the outer valve housing 414 compressing the spring 404 and allowing fluid communication therethrough. The grommet 410 can be provided as an elastic or malleable material which is configured to deform and form an oil-tight seal in response to the compression force provided by the spring 404.

As discussed above the mount interface 20 can include a first annular protrusion 212; and a second annular protrusion 222. In some such embodiments, the first annular protrusion 212 can thus define an outer annular sidewall such that the clean conduit 220 is formed therein, i.e. between the first and second annular protrusions respectively.

In some embodiments the clean conduit 362 can include a splined or fluted lower portion 368 which extends downward into the valve body 414, so as to provide a surface against which the spring 404 can press. In some embodiments the splined or fluted lower portion 368 can include a notch or seat 372 which can receive the opposing end of the spring 404 in a defined position. This splined or fluted lower portion 368 can also be configured to ensure or aide in proper alignment of the conduit 372 with the valve 400 upon assembly.

Also, as illustrated, the element housing can be provided with a sealed internal volume between the clean valve and the contaminated side valve in the uninstalled state, and wherein the system is provided with an initial volume of clean oil prior to installation and also is capable of transporting a portion of contaminated oil away upon removal.

Also contemplated herein is a method of installing a filter assembly, the method including the steps of: providing a mount interface on a piece of equipment, the mount interface having a contaminated conduit and a clean conduit; providing a filter and mount interface as described above and the additional steps of: positioning the clean outlet of the filter assembly about the clean conduit of the mount interface; rotating the filter assembly causing an axial translation of the filter assembly into the mount interface such that the first inner seal member and the second inner seal member are engaged with the mount interface.

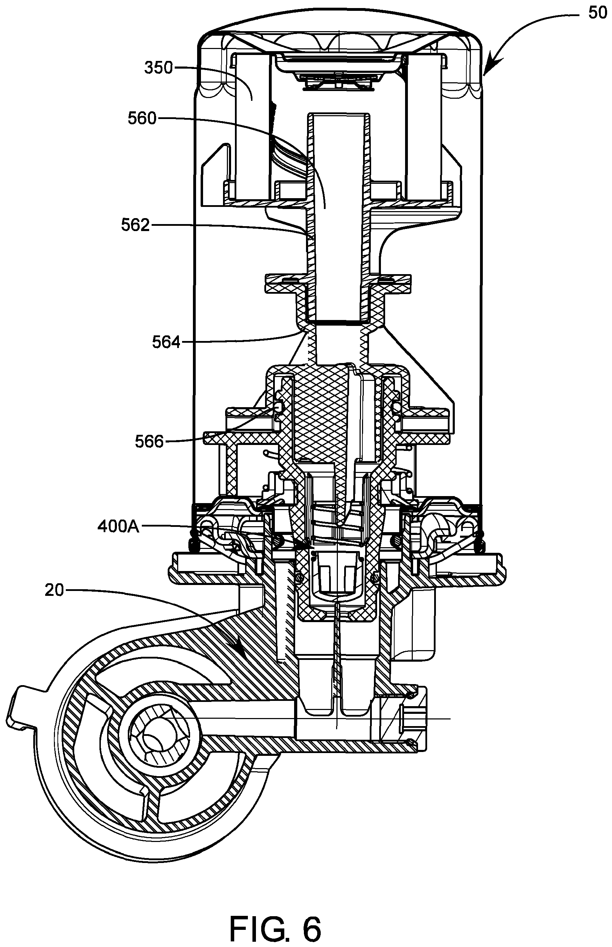

It will also be understood that the clean channel can be formed using a plurality of components so as to provide various advantages with regard to assembly and fabrication. Such an embodiment is illustrated in FIGs. 6-7. In this embodiment, the filter assembly 50 can include a similar valve 400A, a clean channel 560 which can be formed utilizing various separate, rather than unitary, parts, which can include an intermediate channel conduit 564 which can be affixed or bonded to the central clean conduit 562, and an upper seal 566 can be provided which will then sealingly engage the clean valve 400A and the intermediate channel conduit 564. One such advantage of having an intermediate channel conduit, is a majority of the components can remain the same, while changing the length of the intermediate channel conduit and/or central clean conduit length, an increase or decrease in the total volume of oil disposed within the filter assembly can be modified.

Additional steps can include: operating the piece of equipment so as to generate a positive pressure within the contaminated conduit and thus cause the contaminated side valve to open and permit flow therethrough; removing the filter assembly by rotating the filter assembly in an opposing direction, thus causing an opposing axial translation, wherein the opposing axial translation allows the first inner seal member and the second inner seal member to release and wherein the opposing axial translation also allows the clean valve to close.

The filter assembly can further include various filter media 350 which can be configured to remove particulates or contaminates from the fluid stream. However, in some instances the filter media can be omitted altogether, wherein the housing functions as a partial oil change volume, wherein filtration can be performed at a different point in the system.

It will also be understood that while the inlet and outlet channels have been discussed in a particular relative placement herein, that the flow direction can also be reversed through the filter housing wherein the axial channel would then function as an inlet while the circumferential channel would then function as an outlet.

It will also be understood that the height of the filter housing can be varied as well as the relative diameter so as to accommodate various filtration applications as well as increase or decrease the relative volume.

Further, in some instances the filter housing and filter therein can be provided with no oil initially wherein a clean volume of oil can be added from an alternative fill port, wherein the removal of the filter at a service interval only functions to remove a portion of contaminated or used oil.

These aspects of the invention are not meant to be exclusive and other features, aspects, and advantages of the present invention will be readily apparent to those of ordinary skill in the art when read in conjunction with the following description, appended claims, and accompanying drawings. Further, it will be appreciated that any of the various features, media, steps, or other aspects discussed herein are for purposes of illustration only, any of which can be applied in any combination with any such features as discussed in alternative embodiments, as appropriate.

While the principles of the invention have been described herein, it is to be understood by those skilled in the art that this description is made only by way of example and not as a limitation as to the scope of the invention. Other embodiments are contemplated within the scope of the present invention in addition to the exemplary embodiments shown and described herein. Modifications and substitutions by one of ordinary skill in the art are considered to be within the scope of the present invention. Additionally, any features, structures, components, method steps which are discussed in reference to any one of the aforementioned embodiments are readily adaptable for use into and with any features of the other alternative embodiments discussed therein, with the understanding that one of ordinary skill in the art will be capable of assessing the ability of the various embodiments disclosed and be capable of making such adaptations.

## Claims

1. An oil filtration system (10), the system comprising:
a mount interface (20) having a contaminated conduit (210) and a clean conduit (220);
a housing (304),
**characterized in that**
the housing (304) further comprising:
an inlet (310) being provided about an end portion of the housing (304);
an outlet being provided about a central axis of the end portion of the housing (304);
a first inner seal member (390) being configured to seal to an exterior portion of the contaminated conduit (210);
a second inner seal member (394) being configured to seal and separate a filtered fluid exiting the outlet into the clean conduit (220) from a contaminated fluid entering the inlet (310) from the contaminated conduit (210) when in an installed state;
a valve (400) being provided about the outlet, the valve (400) being configured to bias in a closed position in an uninstalled state, and being configured to remain open in an installed state;
wherein, upon removal, the valve (400) is configured to be closed prior to the release of either the first inner seal member (390) or the second inner seal member (394); and
wherein the first inner seal member (390) is configured to release a respective seal after the release of a second respective seal of the second inner seal member (394).

2. The oil filtration system of claim 1, further comprising:
an actuation member (226) extending from the clean conduit (210) configured to extend into the outlet and actuate the valve (400).

3. The oil filtration system of claim 1, further comprising:
a secondary contaminated side valve (450), the contaminated side valve (450) being configured to bias in a closed position, the contaminated side valve (450) being configured to open in response to a positive pressure provided in the contaminated conduit in the installed state.

4. The oil filtration system of claim 1, wherein the mount interface (20) further comprises:
a first annular protrusion (212); and
a second annular protrusion (222);
wherein the first annular protrusion (212) forms the clean conduit (220) therein, and wherein the first inner seal member (390) is configured to abut against an inner surface thereof along a first axial distance between the installed state and a disengaged state.

5. The oil filtration system of claim 3, wherein the housing (304) includes a sealed internal volume between the valve (400) and the contaminated side valve (450) in the uninstalled state, and wherein the system (10) is provided with an initial volume of clean oil prior to installation.

6. A method of installing a filter assembly (30), the method comprising:
providing a mount interface (20) on a piece of equipment, the mount interface (20) having a contaminated conduit (210) and a clean conduit (220);
providing a filter assembly (30),
**characterized in that**
the filter assembly (30) comprising:
an housing (304), the housing (304) further comprising:
an inlet (310) being provided about an end portion of the housing (304);
an outlet being provided about a central axis of the end portion of the housing (304);
a first inner seal member (390) being configured to seal and separate a clean fluid exiting the outlet into the clean conduit (220) from a contaminated fluid entering the inlet from the contaminated conduit (210) when in an installed state about the mount interface (20);
a second inner seal member (394) being configured to seal to a perimeter portion of the housing (304) to the mount interface (20);
a valve (400) being provided about the outlet, the valve (400) being configured to bias in a closed position in an uninstalled state, and being configured to remain open in an installed state;
positioning the clean outlet of the filter assembly (30) about the clean conduit (220) of the mount interface (20);
rotating the filter assembly (30) causing an axial translation of the filter assembly (30) into the mount interface (20) such that the first inner seal member (390) and the second inner seal member (394) are engaged with the mount interface (20),
wherein, upon removal, the valve (40) is configured to be closed prior to the release of either the first inner seal member (390) or the second inner seal member (394); and
wherein the first inner seal member (390) is configured to release a respective seal after the release of a second respective seal of the second inner seal member (394).

7. The method of claim 6, further comprising:
providing a secondary contaminated side valve (450), the contaminated side valve (450) being configured to bias in a closed position;
operating the piece of equipment so as to generate a positive pressure within the contaminated conduit (210) and thus cause the contaminated side valve (450) to open and permit flow there through.

8. The method of claim 7, further comprising:
removing the filter assembly (30) by rotating the filter assembly (30) in an opposing direction, thus causing an opposing axial translation, wherein the opposing axial translation allows the first inner seal member (390) and the second inner seal member (394) to release and wherein the opposing axial translation also allows the valve (400) to close.

9. The method of claim 8, wherein, upon removal, the first inner seal member (390) is configured to release its respective seal prior to any release of the seal of the second inner seal member (394).

10. An oil filtration system (10), the system comprising:
a mount interface (20) having a contaminated conduit (210) and a clean conduit (220), a housing (304),
**characterized in that**
the mount interface (20) further comprising:
a first annular protrusion (212) forming the clean conduit (220) therein; and
a second annular protrusion (222);
the housing (304) further comprising:
an inlet (310) being provided about an end portion of the housing (304);
an outlet being provided about a central axis of the end portion of the housing (304);
a first inner seal member (390) being configured to seal and separate a filtered fluid exiting the outlet into the clean conduit (220) from a contaminated fluid entering the inlet (310) from the contaminated conduit (210) when in an installed state about the mount interface (20);
a second inner seal member (394) being configured to seal to a perimeter portion of the housing (304) to the mount interface (20);
a valve (400) being provided about the outlet, the valve (400) being configured to bias in a closed position in an uninstalled state, and being configured to remain open in an installed state;
an actuation member (226) extending from the clean conduit (220) configured to extend into the outlet and open the valve (400);
wherein the first inner seal member (390) is configured to abut against an inner surface thereof along a first axial distance between the installed state and a disengaged state; and
wherein, upon removal, the first inner seal member (390) is configured to release its respective seal prior to any release of the seal of the second inner seal member (394).

11. An oil filtration system (10), the system comprising:
a housing (304)
**characterized in that**
the housing (304) is configured to couple to a mount interface (20), the housing (304) further comprising:
an inlet (310) being provided about an end portion of the housing (304);
an outlet being provided about a central axis of the end portion of the housing (304);
a contaminated side valve (450) interfacing with the inlet (310);
a clean valve (400) interfacing with the outlet; and
filter media (350) disposed in a fluid pathway between the clean valve (400) and the contaminated side valve (450),
wherein the clean valve (400) is configured to be open when engaged with a mount, but otherwise maintains a closed position for retaining oil in the fluid pathway.

12. The oil filtration system of claim 11, wherein the contaminated side valve (450) is a one-way valve configured to be open when exposed to a positive fluid pressure from the direction of the inlet (310) and close when the fluid pressure is below a specified pressure.

13. The oil filtration system of claim 11, wherein a volume of oil can be stored in the fluid pathway between in a non-use state.

## Patentansprüche

1. Ölfiltrationssystem (10), wobei das System umfasst:
eine Montageschnittstelle (20) mit einer verunreinigten Leitung (210) und mit einer
saubere Leitung (220);
ein Gehäuse (304),
**dadurch gekennzeichnet, dass**
das Gehäuse (304) ferner umfassend:
einen Einlass (310), der um einen Endabschnitt des Gehäuses (304) vorgesehen ist;
einen Auslass, der um eine Mittelachse des Endabschnitts des Gehäuses (304) vorgesehen ist;
ein erstes inneres Dichtungselement (390), das so konfiguriert ist, dass es gegen einen Außenabschnitt der verunreinigten Leitung (210) abdichtet;
ein zweites inneres Dichtungselement (394), das so konfiguriert ist, dass es in einem installierten Zustand ein gefiltertes Fluid, das aus dem Auslass in die saubere Leitung (220) austritt, von einem verunreinigten Fluid, das aus der verunreinigten Leitung (210) in den Einlass (310) eintritt, abdichtet und trennt;
ein Ventil (400), das um den Auslass herum vorgesehen ist, wobei das Ventil (400) so konfiguriert ist, dass es in einem nicht installierten Zustand in eine Schließstellung vorgespannt ist, und so konfiguriert ist, dass es in einem installierten Zustand offen bleibt;
wobei das Ventil (400) beim Entfernen so konfiguriert ist, dass es geschlossen wird, bevor entweder das erste innere Dichtungselement (390) oder das zweite innere Dichtungselement (394) freigegeben wird; und
wobei das erste innere Dichtungselement (390) so konfiguriert ist, dass es eine entsprechende Dichtung nach der Freigabe einer zweiten entsprechenden Dichtung des zweiten inneren Dichtungselements (394) freigibt.

2. Ölfiltrationssystem nach Anspruch 1, ferner umfassend:
ein Betätigungselement (226), das sich von der sauberen Leitung (210) aus erstreckt das so konfiguriert ist, dass es sich in den Auslass erstreckt und das Ventil (400) betätigt.

3. Ölfiltrationssystem nach Anspruch 1, ferner umfassend:
ein sekundäres verunreinigtes stehendes Ventil (450), wobei das verunreinigte stehende Ventil (450) so konfiguriert ist, dass es in einer geschlossenen Position vorgespannt ist, wobei das verunreinigte stehende Ventil (450) so konfiguriert ist, dass es sich in Reaktion auf einen Überdruck öffnet, der in der verunreinigten Leitung im installierten Zustand bereitgestellt wird.

4. Ölfiltrationssystem nach Anspruch 1, wobei die Montageschnittstelle (20) ferner umfasst:
einen ersten ringförmigen Vorsprung (212); und
einen zweiten ringförmigen Vorsprung (222);
wobei der erste ringförmige Vorsprung (212) die saubere Leitung (220) darin bildet, und wobei das erste innere Dichtungselement (390) so konfiguriert ist, dass es an einer Innenfläche desselben entlang eines ersten axialen Abstands zwischen dem installierten Zustand und einem gelösten Zustand anliegt.

5. Ölfiltrationssystem nach Anspruch 3, wobei das Gehäuse (304) ein abgedichtetes Innenvolumen zwischen dem Ventil (400) und dem verunreinigten stehenden Ventil (450) im nicht installierten Zustand beinhaltet, und wobei das System (10) vor der Installation mit einem Anfangsvolumen an sauberem Öl versorgt wird.

6. Verfahren zum Installieren einer Filteranordnung (30), wobei das Verfahren umfasst:
Bereitstellen einer Montageschnittstelle (20) an einem Anlageteil, wobei die Montageschnittstelle (20) eine verunreinigte Leitung (210) und eine saubere Leitung (220) hat;
Bereitstellen einer Filteranordnung (30),
**dadurch gekennzeichnet, dass**
die Filteranordnung (30) umfassend:
ein Gehäuse (304), das Gehäuse (304) ferner umfassend:
einen Einlass (310), der um einen Endabschnitt des Gehäuses (304) vorgesehen ist;
einen Auslass, der um eine Mittelachse des Endabschnitts des Gehäuses (304) vorgesehen ist;
ein erstes inneres Dichtungselement (390), das so konfiguriert ist, dass es ein Reinfluid, das aus dem Auslass in die saubere Leitung (220) austritt, von einem verunreinigten Fluid, das aus der verunreinigten Leitung (210) in den Einlass eintritt, abdichtet und trennt, wenn es sich in einem installierten Zustand um die Montageschnittstelle (20) befindet;
ein zweites inneres Dichtungselement (394), das so konfiguriert ist, dass es an einem Umfangsabschnitt des Gehäuses (304) zur Montageschnittstelle (20) abdichtet;
ein Ventil (400), das um den Auslass herum vorgesehen ist, wobei das Ventil (400) so konfiguriert ist, dass es in einem nicht installierten Zustand in eine Schließstellung vorgespannt ist, und so konfiguriert ist, dass es in einem installierten Zustand offen bleibt;
Positionierung des sauberen Auslasses der Filteranordnung (30) um die saubere Leitung (220) der Montageschnittstelle (20);
Drehen der Filteranordnung (30), was eine axiale Verschiebung der Filteranordnung (30) in die Montageschnittstelle (20) bewirkt, so dass das erste innere Dichtungselement (390) und das zweite innere Dichtungselement (394) mit der Montageschnittstelle (20) in Eingriff kommen,
wobei das Ventil (40) beim Entfernen so konfiguriert ist, dass es geschlossen wird, bevor entweder das erste innere Dichtungselement (390) oder das zweite innere Dichtungselement (394) freigegeben wird; und
wobei das erste innere Dichtungselement (390) so konfiguriert ist, dass es eine entsprechende Dichtung nach der Freigabe einer zweiten entsprechenden Dichtung des zweiten inneren Dichtungselements (394) freigibt.

7. Verfahren nach Anspruch 6, ferner umfassend:
Bereitstellen eines sekundären verunreinigten stehenden Ventils (450), wobei das verunreinigte stehende Ventil (450) so konfiguriert ist, dass es in einer geschlossenen Position vorgespannt ist;
Betreiben des Anlageteils, um einen Überdruck in der verunreinigten Leitung (210) zu erzeugen und so zu bewirken, dass sich das verunreinigte stehende Ventil (450) öffnet und einen Durchfluss ermöglicht.

8. Verfahren nach Anspruch 7, ferner umfassend:
Entfernen der Filteranordnung (30) durch Drehen der Filteranordnung (30) in eine entgegengesetzte Richtung, wodurch eine entgegengesetzte axiale Verschiebung verursacht wird, wobei die entgegengesetzte axiale Verschiebung es dem ersten inneren Dichtungselement (390) und dem zweiten inneren Dichtungselement (394) ermöglicht, sich zu lösen, und wobei die entgegengesetzte axiale Verschiebung auch das Schließen des Ventils (400) ermöglicht.

9. Verfahren nach Anspruch 8, wobei das erste innere Dichtungselement (390) so konfiguriert ist, dass es beim Entfernen seine jeweilige Dichtung freigibt, bevor die Dichtung des zweiten inneren Dichtungselements (394) freigegeben wird.

10. Ölfiltrationssystem (10), wobei das System umfasst:
eine Montageschnittstelle (20) mit einer verunreinigten Leitung (210) und mit einer
sauberen Leitung (220), ein Gehäuse (304),
**dadurch gekennzeichnet, dass**
die Montageschnittstelle (20) ferner umfasst:
einen ersten ringförmigen Vorsprung (212), der die saubere Leitung (220) darin bildet; und
einen zweiten ringförmigen Vorsprung (222);
das Gehäuse (304) ferner umfassend:
einen Einlass (310), der um einen Endabschnitt des Gehäuses (304) vorgesehen ist;
einen Auslass, der um eine Mittelachse des Endabschnitts des Gehäuses (304) vorgesehen ist;
ein erstes inneres Dichtungselement (390), das so konfiguriert ist, dass es ein gefiltertes Fluid, das aus dem Auslass in die saubere Leitung (220) austritt, von einem verunreinigten Fluid, das aus der verunreinigten Leitung (210) in den Einlass (310) eintritt, abdichtet und trennt, wenn es sich in einem installierten Zustand um die Montageschnittstelle (20) befindet;
ein zweites inneres Dichtungselement (394), das so konfiguriert ist, dass es an einem Umfangsabschnitt des Gehäuses (304) zur Montageschnittstelle (20) abdichtet;
ein Ventil (400), das um den Auslass herum vorgesehen ist, wobei das Ventil (400) so konfiguriert ist, dass es in einem nicht installierten Zustand in eine Schließstellung vorgespannt ist, und so konfiguriert ist, dass es in einem installierten Zustand offen bleibt;
ein Betätigungselement (226), das sich von der sauberen Leitung (220) aus erstreckt und so konfiguriert ist, um sich in den Auslass hineinzuerstrecken und das Ventil (400) zu öffnen;
wobei das erste innere Dichtungselement (390) so konfiguriert ist, dass es an einer Innenfläche desselben entlang eines ersten axialen Abstands zwischen dem installierten Zustand und einem gelösten Zustand anliegt; und
wobei das erste innere Dichtungselement (390) so konfiguriert ist, dass es beim Entfernen seine jeweilige Dichtung freigibt, bevor die Dichtung des zweiten inneren Dichtungselements (394) freigegeben wird.

11. Ölfiltrationssystem (10), wobei das System umfasst:
ein Gehäuse (304)
**dadurch gekennzeichnet, dass**
das Gehäuse (304) so konfiguriert ist, dass es mit einer Montageschnittstelle (20) gekoppelt werden kann, wobei das Gehäuse (304) ferner umfasst:
einen Einlass (310), der um einen Endabschnitt des Gehäuses (304) vorgesehen ist;
einen Auslass, der um eine Mittelachse des Endabschnitts des Gehäuses (304) vorgesehen ist;
ein verunreinigtes stehendes Ventil (450), das mit dem Einlass (310) verbunden ist;
ein sauberes Ventil (400), das mit dem Auslass verbunden ist; und
Filtermedien (350), die in einem Fluidweg zwischen dem sauberen Ventil (400) und dem verunreinigten stehenden Ventil (450) angeordnet sind,
wobei das saubere Ventil (400) so konfiguriert ist, dass es offen ist, wenn es in eine Halterung eingreift, aber ansonsten eine Schließstellung beibehält, um das Öl in dem Fluidweg zurückzuhalten.

12. Ölfiltrationssystem nach Anspruch 11, wobei das verunreinigte stehende Ventil (450) ein Einwegventil ist, das so konfiguriert ist, dass es offen ist, wenn es einem Flüssigkeitsüberdruck aus Richtung des Einlasses (310) ausgesetzt ist, und schließt, wenn der Flüssigkeitsdruck unter einem bestimmten Druck liegt.

13. Ölfiltrationssystem nach Anspruch 11, wobei ein Ölvolumen in dem Fluidweg während eines Nichtgebrauchszustands gespeichert werden kann.

## Revendications

1. Système de filtration d'huile (10), le système comprenant :
une interface de montage (20) ayant un conduit contaminé (210) et un conduit propre (220) ;
un boîtier (304),
**caractérisé en ce que**
le boîtier (304) comprenant en outre :
une entrée (310) étant disposée autour d'une partie d'extrémité du boîtier (304) ;
une sortie étant disposée autour d'un axe central de la partie d'extrémité du boîtier (304) ;
un premier élément d'étanchéité interne (390) étant configuré pour assurer l'étanchéité sur une partie extérieure du conduit contaminé (210) ;
un second élément d'étanchéité interne (394) étant configuré pour étanchéifier et séparer, dans un état installé, un fluide filtré quittant la sortie vers le conduit propre (220) par rapport à un fluide contaminé pénétrant dans l'entrée (310) à partir du conduit contaminé (210) ;
une vanne (400) étant disposée autour de la sortie, la vanne (400) étant configurée pour être sollicitée dans une position fermée dans un état non installé, et étant configurée pour rester ouverte dans un état installé ;
dans lequel, lors du retrait, la vanne (400) est configurée pour être fermée avant le relâchement soit du premier élément d'étanchéité interne (390) soit du second élément d'étanchéité interne (394) ; et
dans lequel le premier élément d'étanchéité interne (390) est configuré pour relâcher une étanchéité respective après le relâchement d'une seconde étanchéité respective du second élément d'étanchéité interne (394).

2. Système de filtration d'huile selon la revendication 1, comprenant en outre :
un élément d'actionnement (226) s'étendant à partir du conduit propre (210) configuré pour s'étendre dans la sortie et actionner la vanne (400).

3. Système de filtration d'huile selon la revendication 1, comprenant en outre :
une vanne verticale secondaire contaminée (450), la vanne verticale contaminée (450) étant configurée pour être sollicitée dans une position fermée, la vanne verticale contaminée (450) étant configurée pour s'ouvrir en réponse à une pression positive alimentée dans le conduit contaminé dans l'état installé.

4. Système de filtration d'huile selon la revendication 1, dans lequel l'interface de montage (20) comprend en outre :
une première partie saillante annulaire (212) ; et
une seconde partie saillante annulaire (222) ;
dans lequel la première partie saillante annulaire (212) forme le conduit propre (220) en son sein, et dans lequel le premier élément d'étanchéité interne (390) est configuré pour venir en butée contre une surface interne de celui-ci le long d'une première distance axiale entre l'état installé et un état désengagé.

5. Système de filtration d'huile selon la revendication 3, dans lequel le boîtier (304) inclut un volume interne étanchéifié entre la vanne (400) et la vanne verticale contaminée (450) dans l'état non installé, et dans lequel le système (10) est pourvu d'un volume initial d'huile propre avant installation.

6. Procédé d'installation d'un ensemble de filtre (30), le procédé comprenant :
la fourniture d'une interface de montage (20) sur une pièce d'équipement, l'interface de montage (20) ayant un conduit contaminé (210) et un conduit propre (220) ;
la fourniture d'un ensemble de filtre (30),
**caractérisé en ce que**
l'ensemble de filtre (30) comprend :
un boîtier (304), le boîtier (304) comprenant en outre :
une entrée (310) étant disposée autour d'une partie d'extrémité du boîtier (304) ;
une sortie étant disposée autour d'un axe central de la partie d'extrémité du boîtier (304) ;
un premier élément d'étanchéité interne (390) configuré pour étanchéifier et séparer un fluide pur sortant de la sortie dans le conduit propre (220) d'un fluide contaminé entrant dans l'entrée à partir du conduit contaminé (210) lorsqu'il est installé sur l'interface de montage (20) ;
un second élément d'étanchéité interne (394) étant configuré pour assurer l'étanchéité sur une partie de périmètre du boîtier (304) sur l'interface de montage (20) ;
une vanne (400) étant disposée autour de la sortie, la vanne (400) étant configurée pour être sollicitée dans une position fermée dans un état non installé, et étant configurée pour rester ouverte dans un état installé ;
le positionnement de la sortie propre de l'ensemble de filtre (30) autour du conduit propre (220) de l'interface de montage (20) ;
la rotation de l'ensemble de filtre (30) amenant une translation axiale de l'ensemble de filtre (30) dans l'interface de montage (20) de sorte que le premier élément d'étanchéité interne (390) et le second élément d'étanchéité interne (394) soient en prise avec l'interface de montage (20),
dans lequel, lors du retrait, la vanne (40) est configurée pour être fermée avant le relâchement soit du premier élément d'étanchéité interne (390) soit du second élément d'étanchéité interne (394) ; et
dans lequel le premier élément d'étanchéité interne (390) est configuré pour relâcher une étanchéité respective après le relâchement d'une seconde étanchéité respective du second élément d'étanchéité interne (394).

7. Procédé selon la revendication 6, comprenant en outre :
la fourniture d'une vanne verticale secondaire contaminée (450), la vanne verticale contaminée (450) étant configurée pour être sollicitée dans une position fermée ;
le fonctionnement de la pièce d'équipement de façon à générer une pression positive au sein du conduit contaminé (210) et amener ainsi la vanne verticale contaminée (450) à s'ouvrir et à permettre un écoulement à travers celle-ci.

8. Procédé selon la revendication 7, comprenant en outre :
le retrait de l'ensemble de filtre (30) en mettant en rotation l'ensemble de filtre (30) dans une direction opposée, amenant ainsi une translation axiale opposée, dans lequel la translation axiale opposée permet au premier élément d'étanchéité interne (390) et au second élément d'étanchéité interne (394) de se libérer et dans lequel la translation axiale opposée permet également à la vanne (400) de se fermer.

9. Procédé selon la revendication 8, dans lequel, lors du retrait, le premier élément d'étanchéité interne (390) est configuré pour relâcher son étanchéité respective avant un quelconque relâchement de l'étanchéité du second d'étanchéité interne (394).

10. Système de filtration d'huile (10), le système comprenant :
une interface de montage (20) ayant un conduit contaminé (210) et un conduit propre (220), un boîtier (304),
**caractérisé en ce que**
l'interface de montage (20) comprend en outre :
une première partie saillante annulaire (212) formant le conduit propre (220) en son sein ; et
une seconde partie saillante annulaire (222) ;
le boîtier (304) comprenant en outre :
une entrée (310) étant disposée autour d'une partie d'extrémité du boîtier (304) ;
une sortie étant disposée autour d'un axe central de la partie d'extrémité du boîtier (304) ;
un premier élément d'étanchéité interne (390) étant configuré pour étanchéifier et séparer un fluide filtré quittant la sortie vers le conduit propre (220) par rapport à un fluide contaminé pénétrant dans l'entrée (310) à partir du conduit contaminé (210) lorsqu'il se trouve dans un état installé autour de l'interface de montage (20) ;
un second élément d'étanchéité interne (394) étant configuré pour assurer l'étanchéité sur une partie de périmètre du boîtier (304) sur l'interface de montage (20) ;
une vanne (400) étant disposée autour de la sortie, la vanne (400) étant configurée pour être sollicitée dans une position fermée dans un état non installé, et étant configurée pour rester ouverte dans un état installé ;
un élément d'actionnement (226) s'étendant à partir du conduit propre (220) configuré pour s'étendre dans la sortie et ouvrir la vanne (400) ;
dans lequel le premier élément d'étanchéité interne (390) est configuré pour venir en butée contre une surface interne de celui-ci le long d'une première distance axiale entre l'état installé et un état désengagé ; et
dans lequel, lors du retrait, le premier élément d'étanchéité interne (390) est configuré pour relâcher son étanchéité respective avant un quelconque relâchement de l'étanchéité du second élément d'étanchéité interne (394).

11. Système de filtration d'huile (10), le système comprenant :
un boîtier (304)
**caractérisé en ce que**
le boîtier (304) est configuré pour se coupler à une interface de montage (20), le boîtier (304) comprenant en outre :
une entrée (310) étant disposée autour d'une partie d'extrémité du boîtier (304) ;
une sortie étant disposée autour d'un axe central de la partie d'extrémité du boîtier (304) ;
une vanne verticale contaminée (450) assurant l'interface avec l'entrée (310) ;
une vanne propre (400) assurant l'interface avec la sortie ; et
un milieu filtrant (350) disposé dans une voie de fluide entre la vanne propre (400) et la vanne verticale contaminée (450), dans lequel la vanne propre (400) est configurée pour être ouverte lorsqu'elle
est engagée avec un support de montage, mais dans un cas contraire maintient une position fermée pour retenir de l'huile dans la voie de fluide.

12. Système de filtration d'huile selon la revendication 11, dans lequel la vanne verticale contaminée (450) est une vanne unidirectionnelle configurée pour être ouverte lorsqu'elle est exposée à une pression de fluide positive provenant de la direction de l'entrée (310) et se fermer lorsque la pression de fluide est inférieure à une pression spécifiée.

13. Système de filtration d'huile selon la revendication 11, dans lequel un volume d'huile peut être stocké dans la voie de fluide pendant un état de non-utilisation.
